# EUROPEAN PATENT SPECIFICATION

(11) **EP 4 351 262 B1**
(45) Date of publication and mention of the grant of the patent: **25.11.2026**
(21) Application number: 24158856.5
(22) Date of filing: 31.10.2019
(51) Int. Cl.: H04L 5/00, H04W 74/08

(54) **RESOURCE-STAGGERED CODED MULTIPLE ACCESS**
RESSOURCENVERSETZTER CODIERTER MEHRFACHZUGRIFF
ACCÈS MULTIPLE CODÉ À DÉCALAGE DE RESSOURCES

(30) Priority: 02.11.2018 EP 18204207
(43) Date of publication of application: 10.04.2024
(62) Document number(s) of the earlier application(s) in accordance with Art. 76 EPC: 19801767.5 / 3 874 654
(73) Proprietor: Fraunhofer-Gesellschaft zur Förderung der angewandten Forschung e.V., 80686 München (DE)
(72) Inventor: UTKOVSKI, Zoran, 10587 Berlin (DE); DOMMEL, Johannes, 10587 Berlin (DE); HAUSTEIN, Thomas, 10587 Berlin (DE); THIELE, Lars, 10587 Berlin (DE)
(74) Representative: König, Andreas Rudolf

(56) References cited:
- WO-A1-2017/197075
- HUGHES: "Transmitter side signal processing of ACMA", vol. RAN WG1, no. Chengdu, China; 20181008 - 20181012, 28 September 2018 (2018-09-28), XP051518029, Retrieved from the Internet <URL:http://www.3gpp.org/ftp/tsg%5Fran/WG1%5FRL1/TSGR1%5F94b/Docs/R1%2D1810623%2Ezip> [retrieved on 20180928]
- YAN CHEN ET AL: "Toward the Standardization of Non-Orthogonal Multiple Access for Next Generation Wireless Networks", IEEE COMMUNICATIONS MAGAZINE., vol. 56, no. 3, 1 March 2018 (2018-03-01), US, pages 19 - 27, XP055480187, ISSN: 0163-6804, DOI: 10.1109/MCOM.2018.1700845
- HUGHES: "NR-NOMA: Partially Asynchronous and Multi-Layer Transmission of ACMA", vol. RAN WG1, no. Gothenburg, Sweden; 20180820 - 20180824, 10 August 2018 (2018-08-10), XP051515590, Retrieved from the Internet <URL:http://www.3gpp.org/ftp/tsg%5Fran/WG1%5FRL1/TSGR1%5F94/Docs/R1%2D1808205%2Ezip> [retrieved on 20180810]
- FRAUNHOFER HHI ET AL: "Discussion on staggered NOMA", vol. RAN WG1, no. Spokane, USA; 20181112 - 20181116, 2 November 2018 (2018-11-02), XP051479414, Retrieved from the Internet <URL:http://www.3gpp.org/ftp/tsg%5Fran/WG1%5FRL1/TSGR1%5F95/Docs/R1%2D1813148%2Ezip> [retrieved on 20181102]

## Description

The present invention concerns the field of wireless communication networks or systems, more specifically, concepts to improve transmission by providing offsets with regard to synchronized communication. The present invention relates to wireless communications networks, to a transmitter and to a base station and to methods for operating the same. The present invention, in particular, extends elements of staggered coded multiple access (or staggered asynchronous coded multiple access (SACMA)).

A slotted ALOHA scenario with Successive Interference Cancellation (SIC) capabilities at the receiver may improve dramatically the performance of the random-access procedure due to the ability to remove successfully decoded packets from the received signal within a specific time frame. However, current results from theory show that by introducing a random time-shift (offset) individually to each users' transmission increases the time-diversity and allows further to resolve collisions..

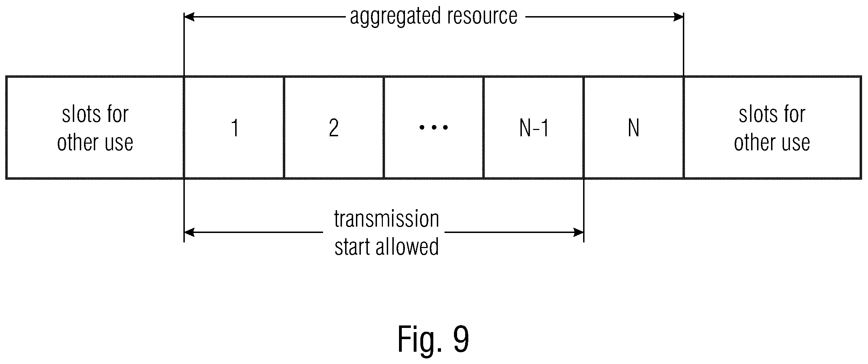

In connection with 3GPP, this idea is proposed to be adopted as the Asynchronous Coded Multiple Access (ACMA) as described in [1], which uses random time-offset for the start of the individual transmissions with respect to the beginning of the frame, or an aggregated resource. The shifted timing improves overloading capability by randomly distributing multiuser interference, wherein the start time of each transmission is randomly distributed within the frame, i.e. the aggregated resource, as illustrated in Fig. 9.

Known concepts face the problems that the receiver needs to estimate offset parameters for each user. The same delay value for two (or more) users leads to collision and thus to an increase in the probability of errors.

R1-181062 (Hughes, Transmitter Side Signal Processing of ACMA) describes transmitter side signal processing of ACMA in a time-limited frequency resource assignment including Time-Division Duplexing (TDD), wherein ACMA uses randomly staggered timing to improve overloading capability.

"Toward the Standardization of Non-Orthogonal Multiple Access for Next Generation Wireless Networks" published in IEEE Communications Magazine, March 2018 (DOI 10.1109/MCOM.2018.1700845) describes non-orthogonal multiple access as an efficient method of radio resource sharing.

R1-1808205 (Hughes, NR-NOMA: Partially Asynchronous and Multi-Layer Transmission of ACMA) relates to an approach to accommodate asynchronous ACMA in a time-limited frequency resource assignment by selecting a uniformly distributed random number and to transmit a message after a time indicated by the random number.

R1-1813148 (Fraunhofer; Discussion on Staggered NOMA) relates to non-orthogonal multiple access and describes NOMA with sparse code access.

WO2017/197075 A1 relates to systems, methods and instrumentalities for non-orthogonal multiple access.

Thus, there is a demand for providing for wireless communications networks, a transmitter and a base station and for method for operating the same that allow for a low probability of errors.

An object of the present invention is thus to provide for wireless communications networks, a transmitter, a base station and a network controller that allow to transmit signals with a low probability of error.

This object is achieved by the subject-matter as defined in the independent claims.

The inventors have found that by individually signing an offset to a transmission within a slot of a frame of the wireless communications network, there is obtained a plurality of different offset values such that an event of collision has only minor impact because it may easily be decoded or resolved such that an overall error rate is low. Even if facing a collision within one slot, the amount or portion of the transmission that is collided may below based on different offsets within different transmitters. Even if having a high collision portion, there is at least a probability that the next slot used within a frame faces no collision or a collision with a different transmitter such that in total a high probability for resolving already decoding the collision may be obtained. Alternatively or in addition, the offset may at least partially be implemented in the frequency-domain, i.e., a frequency-offset may be implemented. This may allow for a low collision probability, in particular, when comparing the results to offset-less concepts or to concepts that provide for a time-offset only. Equivalently, embodiments may allow for the system to accommodate more users under the same error probability as before. That is, with the proposed staggering one may decrease the overall error probability by keeping the number of users fixed (due to the partial instead of fully-overlapping collisions taking place) and/or may invest at least a part of this advantage to increase the number of users sharing the available resources, e.g., under a target error rate. Embodiments allow to incorporate the concept of asynchronous random access in the framework of systems which assume an underlying time-frequency plan, such as e.g. OFDM.

Further embodiments are defined in the dependent claims.

Embodiments of the present invention are now described in further detail with reference to the accompanying drawings, in which:
- Fig. 1: is a schematic representation of an example of a network infrastructure in accordance with an embodiment, like a wireless communications system including a plurality of base stations, each serving a specific area surrounding the base station schematically represented by the respective cells;
- Fig. 2a: shows an exemplary scheme of an LTE frame as described in connection with Fig. 1;
- Fig. 2b: shows a schematic view of an alternative structure of a frame in accordance with an embodiment;
- Fig. 3: shows an exemplary LTE OFDMA-based subframe with two antenna ports for different selected Tx antenna ports;
- Fig. 4: shows a schematic block diagram of a wireless communications network according to an embodiment;
- Fig. 5: shows a communication frame as having a number of N slots, each slot having a time duration Tₛ within the frame duration T_{F} and shows a set-individual offset in accordance with an embodiment;
- Fig. 6a: shows a schematic diagram for illustrating an implementation of set-specific offsets according to an embodiment;
- Fig. 6b: shows a schematic diagram of sets 22₁ and 22₂ being offset by set-individual offsets in frequency according to an embodiment;
- Fig. 6c: shows a schematic diagram of the sets being offset as well as in a first resource time and a second resource frequency according to an embodiment;
- Fig. 6d: shows a comparison between different offset schedules for illustrating an embodiment;
- Fig. 7a: shows a schematic block diagram of a wireless communications network cell in a configuration having the base station receiving signals from nine transmitting UEs according to an embodiment;
- Fig. 7b: shows a schematic diagram of an example scheme for scheduling six OFDMA symbols to the nine transmitters of Fig. 7a so as to overload the wireless channel and to enable the nine transmitters to transmit simultaneously according to an embodiment;
- Fig. 8a: shows a schematic block diagram illustrating the concept of mapping a signal to be transmitted by a transmitter into a number of part signals according to an embodiment;
- Fig. 8b: shows a schematic block diagram illustrating different options of mapping a signal to be transmitted by a transmitter into a number of part signals according to embodiments; and
- Fig. 9: shows a schematic diagram of a communications scheme using aggregated resources;

In the following, preferred embodiments of the present invention are described in further detail with reference to the enclosed drawings in which elements having the same or a similar function are referenced by the same or similar reference signs.

Also, in the following, reference is made to OFDM (orthogonal frequency division multiple access) networks and/or LTE (long term evolution) networks, embodiments described herein are not limited hereto.

Although, the embodiments described herein may relate to Log Term Evolution (LTE) any other communication scheme, in particular in connection with slotted communication using slots may be used. A slot may be regarded as an interval, e.g., in time and/or frequency that is possibly sub-structured, e.g., into symbols or the like, and provides for some kind of synchronization for communication, wherein synchronization is not limited to time.

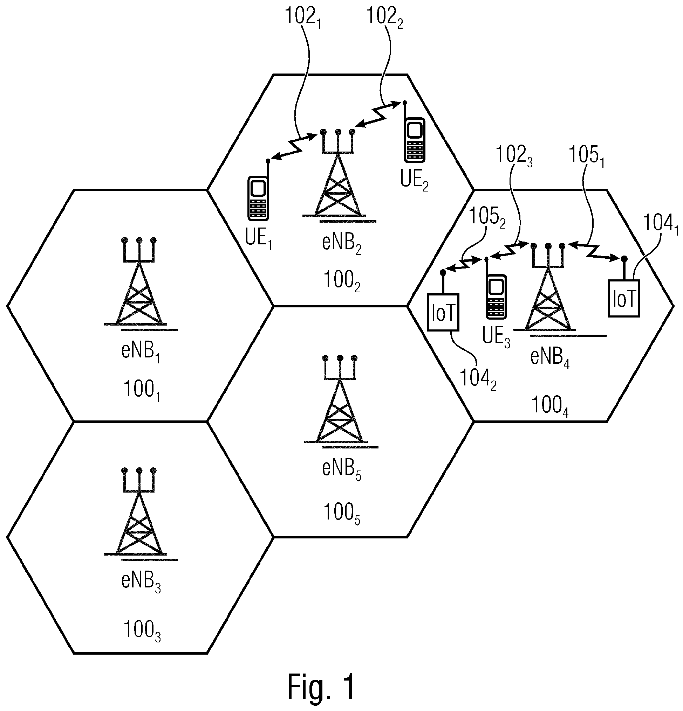

Fig. 1 is a schematic representation of an example of such a network infrastructure, like a wireless communications system including a plurality of base stations eNB₁ to eNB₅, each serving a specific area surrounding the base station schematically represented by the respective cells 100₁ to 100₅. The base stations are provided to serve users within a cell. A user may be a stationary device or a mobile device. Further, the wireless communication system may be accessed by IoT devices which connect to a base station or to a user. Fig. 1 shows an exemplary view of only five cells, however, the wireless communication system may include more or less of such cells. Fig. 1 shows two users UE₁ and UE₂, also referred to as user equipment (UE), that are in cell 100₂ and that are served by base station eNB₂. Another user UE₃ is shown in cell 100₄ which is served by base station eNB₄. The arrows 100₂, 102₂ and 102₃ schematically represent uplink/downlink connections for transmitting data from a user UE₁, UE₂ and UE₃ to the base stations eNB₂, eNB₄ or for transmitting data from the base stations eNB₂, eNB₄ to the users UE₁, UE₂, UE₃. Further, Fig. 1 shows two loT devices 104₁ and 104₂ in cell 100₄, which may be stationary or mobile devices. The loT device 104₁ accesses the wireless communication system via the base station eNB4 to receive and transmit data as schematically represented by arrow 105₁. The loT device 104₂ accesses the wireless communication system via the user UE₃ as is schematically represented by arrow 105₂. UE₁, UE₂ and UE₃ may access the wireless communications system or network by communicating with the base station.

The wireless communications network system may be any single-tone or multicarrier system based on frequency-division multiplexing, like the orthogonal frequency-division multiplexing (OFDM) system, the orthogonal frequency-division multiple access (OFDMA) system defined by the LTE standard, or any other IFFT-based signal with or without CP, e.g. DFT-SOFDM. Other waveforms, like non-orthogonal waveforms for multiple access, e.g. filterbank multicarrier (FBMC), may be used. Other multiplexing schemes like time-division multiplexing (time-division duplex - TDD) may be used.

An OFDMA system for data transmission may include an OFDMA-based physical resource grid which comprises plurality of physical resource blocks (PRBs) each defined by 12 subcarriers by 7 OFDM symbols and including a set of resource elements to which various physical channels and physical signals are mapped. A resource element is made up of one symbol in the time domain and one subcarrier in the frequency domain. For example, in accordance with the LTE standard a system bandwidth of 1.4 MHz includes 6 PRBs, and the 200 kHz bandwidth in accordance with the NB-loT enhancement of the LTE Rel. 13 standard includes 1 PRB. In accordance with LTE and NB-IoT, the physical channels may include the physical downlink shared channel (PDSCH) including user specific data, also referred to as downlink payload data, the physical broadcast channel (PBCH) including for example the master information block (MIB) or the system information block (SIB), the physical downlink control channel (PDCCH) including for example the downlink control information (DCI), etc. The physical signals may comprise reference signals (RS), synchronization signals and the like. The LTE resource grid comprises a 10 ms frame in the time domain having a certain bandwidth in the frequency domain, e.g. 1.4 MHz. The frame has 10 subframes of 1 ms length, and each subframe includes two slots of 6 or 7 OFDM symbols depending on the cyclic prefix (CP) length.

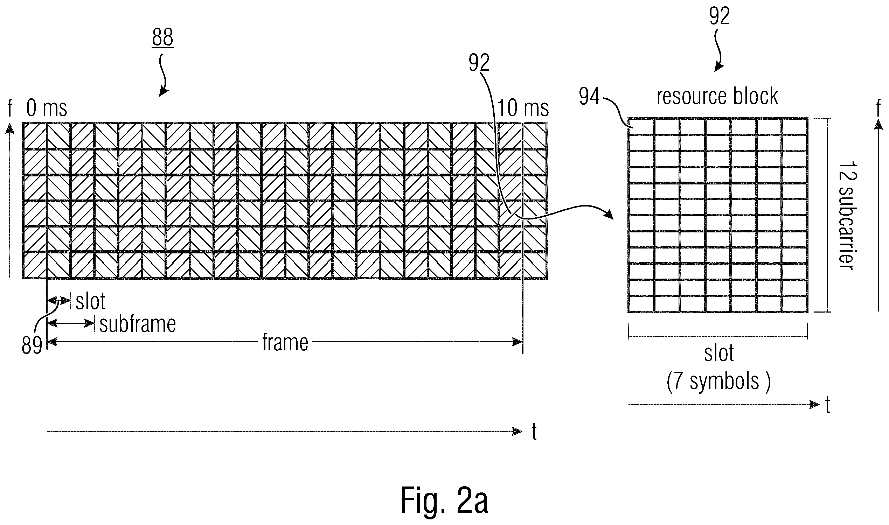

Fig. 2a shows an exemplary scheme of an LTE frame 88 as described in connection with Fig. 1, the frame 88 may have ten subframes of 10 ms length, wherein each subframe may include two slots 89 of six or seven OFDM symbols each, depending on the cyclic prefix (CP) length. For example, in LTE, each slot 89 may comprise a number of resource blocks 92, wherein each resource block 92 may be divided into a number of, for example, 12 subcarriers in frequency and into six or seven symbols in time. Resource elements 94 of resource block 92 may have a length of one symbol and may occupy one subcarrier.

To transmit information, one, a plurality or all resources elements 94 of a resource block 92 may be utilized. Alternatively or in addition, more than one resource block 92 (all available resource elements therein or only a part thereof) may be used.

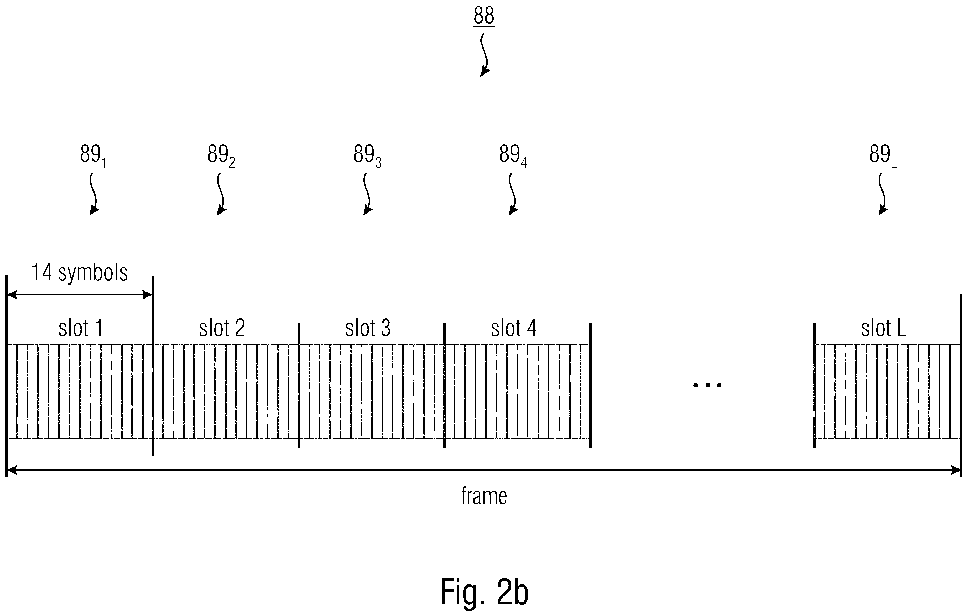

Fig. 2b shows a schematic view of an alternative structure of frame 88. Frame 88 may have a number of L slots 89, wherein L may be any suitable number larger than 0, e.g., 1 or more, 2 or more, 5 or more, 10 or more or 15 or more such as 18. In accordance with Fig. 2a, each slot 89 may comprise a number of symbols, wherein the number of symbols may be different to 6 or 7, e.g., 14 or any other number.

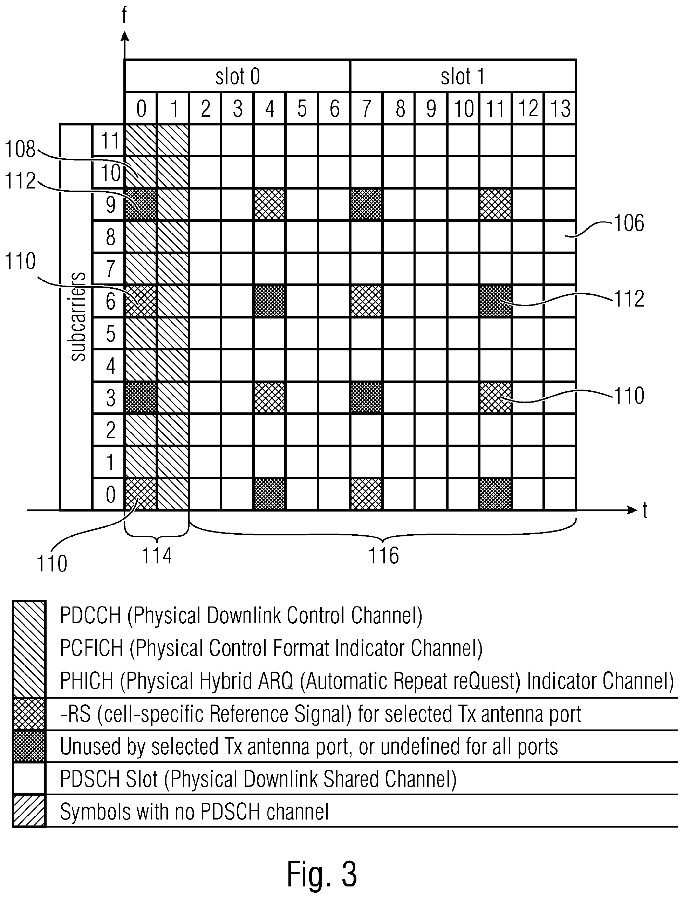

Fig. 3 shows an exemplary LTE OFDMA-based subframe with two antenna ports for different selected Tx antenna ports. The subframe includes two resource blocks (RB) each made up of one slot of the subframe and 12 subcarriers in the frequency domain. The subcarriers in the frequency domain are shown as subcarrier 0 to subcarrier 11, and in the time domain, each slot includes 7 OFDM symbols, e.g. in the slot 0 OFDM symbols 0 to 6 and in slot 1 OFDM symbols 7 to 13 so as to have 14 OFDM symbols in a subframe. The white boxes 106 represent resource elements allocated to the PDSCH including the payload or user data, also referred to a payload region. The resource elements for the physical control channels (including non-payload or non-user data), also referred to the control region, are represented by the hatched boxes 103. In accordance with examples, resource elements 103 may be allocated to the PDCCH, to the physical control format indicator channel (PCFICH), and to the physical hybrid ARQ indicator channel (PHICH). The crosshatched boxes 107 represent resource elements which are allocated to the RS that may be used for the channel estimation. The black boxes 108 represent unused resources in the current antenna port that may correspond to RSs in another antenna port. The resource elements 103, 107, 108 allocated to the physical control channels and to the physical reference signals are not evenly distributed over time. More specifically, in slot 0 of the subframe the resource elements associated with the symbol 0 and the symbol 1 are allocated to the physical control channels or to the physical reference signals, no resource elements in the symbols 0 and 1 are allocated to payload data. The resource elements associated with symbol 4 in slot 0 as well as the resource elements associated with symbols 7 and 11 in slot 1 of the subframe are allocated in part to the physical control channels or to the physical reference signals. The white resource elements shown in Fig. 3 may include symbols associated with payload data or user data and in the slot 0 for symbols 2, 3, 5 and 6, all resource elements 106 may be allocated to payload data, while less resource elements 106 are allocated to payload data in symbol 4 of slot 0, and no resource element is allocated to payload data in symbols 0 and 1. In slot 1, the resource elements associated with symbols 8, 9, 10, 12 and 13 are all allocated to payload data, while for symbols 7 and 11 less resource elements are allocated to payload data.

Reference to LTE, especially in view of a frame structure, is made by way of non-limited example only. Frames may comprise a different structure, especially in view of a number of subframes, slots and/or resource blocks.

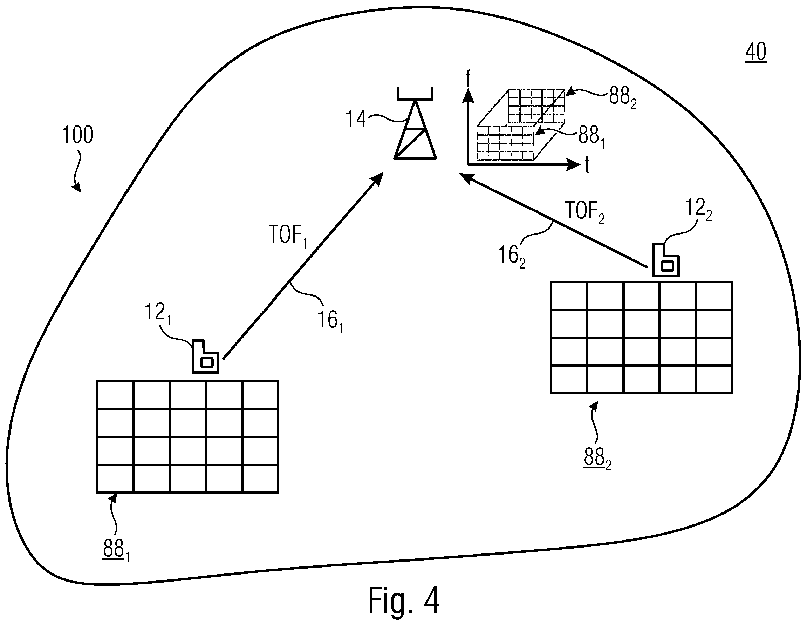

Fig. 4 shows a schematic block diagram of a wireless communications network 40 according to an embodiment. The wireless communications network 40 comprises one, two, three or even a higher number of transmitters 12₁, 12₂ respectively. The transmitters 12 may comprise, for example, a functionality of loT devices 104 and/or of a UE.

The wireless communications network 40 comprises a base station 14 configured for operating a wireless communications network cell 100 of the wireless communications network 40 so as to provide communication in the cell 100. The communication may relate to a direct communication between the transmitters 12₁ and 12₂ and/or to a communication between the transmitter 12₁ and the base station 14 and/or between the transmitter 12₂ and the base station 14. For example, the base station 14 may set up a communication scheme as described in connection with Figs. 1 to 3 as a basis for the embodiments described herein. I.e., the communication may be performed such that a communication frame is divided into a plurality of slots. Each slot comprises a plurality of associated physical resources as described in connection with Fig. 2.

The transmitters 12₁ and 12₂ may be configured for transmitting a signal 16₁, 16₂, respectively. The respective frame 88₁, 88₂ utilized, filled or referenced at the respective transmitter 12₁, 12₂ respectively may be a same frame structure at the base station 14, i.e., may correspond to a synchronization in time, frequency, and/or space at the base station 14. Based on several mechanisms such as imprecise clocks of the transmitters 12₁ and 12₂, the frames 88₁ and 88₂ may have an offset in time when the signals 16₁ and 16₂ arrive at the base station 14. Further, based on different traveling times (Time Of Flight) of the signals 16₁ and 16₂, mechanisms like timing advance may be applied so as to synchronize frames 88₁ and 88₂ at the base station 14. I.e., the transmitters 12₁ and 12₂ may transmit at different times so as to compensate for the different time of flights.

The set-individual offset with regard to the synchronization in time, space and/or frequency at the base station 14 does not limit the signals to be transmitted to be directed to the base station each but also allow, alternatively or in addition a peer-to-peer communication, i.e., a transmission of signals directly between peers such as UEs or loT devices. A peer-to-peer communication may benefit from the same advantages and may never the less agree on a common time/frequency/space structure as the one implemented at the base station 14.

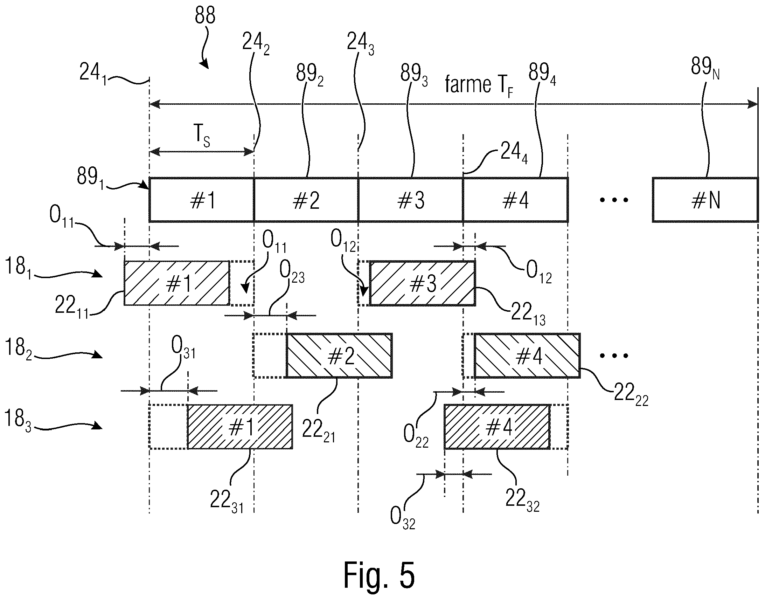

In difference to those concepts or effects and in difference to a constant offset in time for a specific transmission, the transmitter 12₁ and/or 12₂ is configured to offset the transmission of each utilized slot within a frame individually, i.e., so as to comprise a set-individual offset as described in connection with Fig. 5. The set-individual offset refers to a set of physical resources used or employed within a slot. Resources of a frame or slot may exclusively be allocated to a single node. Alternatively, the base station may be configured for operating the wireless communications network cell according to a sparse allocation scheme. Alternatively or in addition, the transmitter may be configured for using the slots according to a sparse allocation scheme. A sparse allocation scheme may be understood as allocating only a subset of all possible resources to a node or application.

An example for a sparse allocation scheme is a non-orthogonal multiple access (NOMA) scheme. Such a NOMA scheme may be understood as allocating only a subset of slots to a transmitter or application and to reuse resources amongst transmitters or applications so as to generate an overload within the network. Collisions obtained thereby may be resolved such that an overall throughput may be increased. For example, Fig. 5 illustrates the frame 88 as having a number of N slots 89₁ to 89_{N}, each slot 89₁ to 89_{N} having a time duration Tₛ within the frame duration T_{F}. For example, a layer 18₁ comprises resources of slots 89₁ and 89₃. A layer 18₂ may comprise slots 89₂ and 89₄. A slot 18₃ may comprise slots 89₁ and 89₄. By way of example, the four slots 89₁ to 89₄ are associated or divided into three sets or layers of slots, wherein each slot is double-used by a user 18₁ to 18₃. A different way of allocating or dividing resources may be implemented.

To each slot 89, there may be associated a set 22 of resources that may implement at least one resource element 94, a set or even complete resource block respectively. The set 22 of resources used by a transmitter may be set-individually offset with respect to a beginning or start 24₁, 24₂, 24₃, 24₄, respectively of a slot 89ᵢ. The transmitter may send the signal 16₁ such that the resources 22₁₁ are offset by the offset O₁₁ with respect to the beginning 24₁ of slot 89₁. Further, the transmitter may be configured for transmitting the signal 16₁ such that the set 22₁₃ of resources is offset by an offset O₁₂ with respect to the start 24₃ of slot 89₃ in time. Offsets O₁₁ and O₁₂ are different from each other and are individually selected or determined for each set 22₁₁ and 22₁₃ within a layer 18₁ to 18₃.

In layer 18₂, set 22₂₁ of resources is offset by an offset O₂₁ with respect to the start 24₂ of slot 89₂. Further, the set 22₂₂ is offset by an offset O₂₂ with respect to the start 24₄ of slot 89₄.

Further, in layer 18₃, a set 22₃₁ (that may be equal to the set 22₁₁) may be offset with a set-individual offset O₃₁ with respect to the start 24₁. The set 22₃₂ of layer 18₃, that may be equal to the set 22₂₂, may be offset by an offset O₃₂ with respect to the start 24₄.

Within one layer 18₁ to 18₃ and/or within sets 22 of a same slot 89, the offsets may differ from each other, wherein, the offsets are selected, chosen or set such that the respective offset applies at the receiving node, e.g., the base station. This allows colliding sets, e.g., sets 22₁₁ and 22₃₁, to be at least partially successfully decoded with a high probability.

A transmitter may use, select or have allocated any number of slots and/or any number of sets 22 and/or any number of resources allocated to a slot or OFDM symbol.

In other words, embodiments provide for a system where users access multiple instances of the channel resource for transmission. The motivation for the sparse resource mapping is to reduce the receiver complexity while effectively allowing for overloading the system. Embodiments provide for a system that extends known systems to consider (probably deterministic) sparse slot allocation, i.e., the transmission is spread over a subset of available slots within one frame (or subsets of physical resource blocks - PRBs - within an orthogonal grid). Additionally, embodiments allow to employ a user specific shift/offset in time and/or frequency domain, wherein user specific is related to user-specific patterns of set-individual offsets within one layer.

Embodiments are based on the assumptions that a sparse resource allocation can be assumed randomly, i.e., each user may pick a random slot/PRB(s) for transmission, as in a contention-based scenario. Alternatively, the allocation may be scheduled following a certain structure which can be regular (e.g., structured based on a predefined code-book or generated following a certain rule or may, alternatively, be irregular). Alternatively, or in addition, a UE/device or a set of UEs/devices with sporadic activation can use a preconfigured (rather than scheduled) set of resources such as a resource pool/bandwidth part or the like for non-orthogonal transmissions in a grant-free fashion. The preconfigured set of resources can be understood as a form of semi-persistent scheduling. A further assumption is that each slot may carry a replica of the user's code-word (e.g., in a random-access scheme) and/or may have parts of the message to be transmitted (i.e., the message is split and transmitted over multiple slots in case of a large code-word and/or a low code-rate).

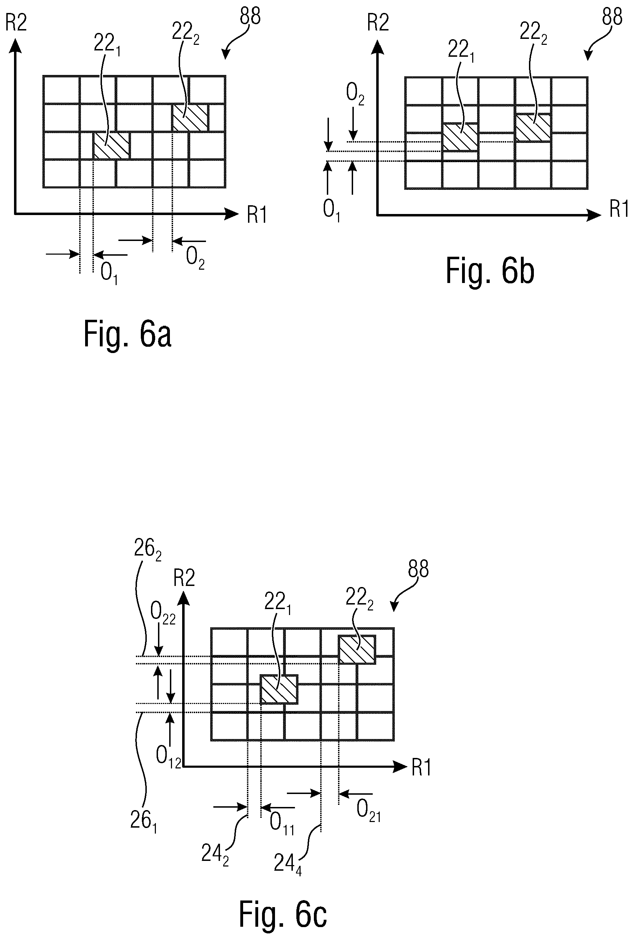

Fig. 6a shows a schematic diagram for illustrating an implementation of set-specific offsets according to an embodiment. By way of example, there is shown a two-dimensional grid of resources R1 and R2, wherein, for example, those resources are selected from the resource frequency, time, and space.

By way of example, resource R1 may be time and resource R2 may be frequency. Sets 22₁ and 22₂ of resources that are used by a receiver may be located differently in time and/or frequency, but may also have one resource with same, similar, or identical value. For example, as described in connection with Fig. 5, the sets 22₁ and 22₂ may have a same frequency at different times or different frequencies and the same times. Sets 22₁ and 22₂ are offset by set-individual offsets O₁ and O₂ in time.

Fig. 6b shows a schematic diagram of sets 22₁ and 22₂ being offset by set-individual offsets O₁, O₂, respectively in frequency, i.e., resource R2.

Fig. 6c shows a schematic diagram of the sets 22₁ and 22₂ being offset as well as in resource R1 (time) and resource R2 (frequency). E.g., set 22₁ is offset with an offset O₁₁ in time and with an offset O₁₂ in frequency with respect to a start 24₂ in time and of a minimum frequency 26₁ of the resources according to a synchronized schedule of the frame 88.

Set 22₂ may be offset with an offset O₂₁ with respect to a start 24₄ in time and/or with an offset O₂₂ with respect to a minimum frequency 26₂ of the resources in the synchronized frame 88, wherein synchronization refers, within the scope of the present embodiments, to time and frequency.

Offsets described herein relate to non-zero values in time and/or frequency. According to an embodiment, it may be sufficient that one offset, i.e., the time-value or the frequency-value is non-zero. According to embodiments, both values may be non-zero. Further, embodiments relate to transmitters that offset different sets within a single frame with offsets of different resources. I.e., a first set of resources within a frame of a transmitter may be offset with respect to time and a second set may be offset with respect to frequency only. Alternatively, at least one of the sets may be offset in two-dimensions or even in three-dimensions, i.e., a third resource.

When referring again to Fig. 5, a maximum value of the set-individual offset in the illustrated two-dimensional grid, e.g., a time-frequency grid, may be selected such that a center of gravity of the used set of resources is located within the synchronized slot of the frame. I.e., a set-individual offset may comprise a time offset being larger than -0.5 of a time duration the slot and smaller than +0.5 of the time duration. Between those values, the set-individual offset may have any value, wherein, for example, the offsets may differ with respect to each other by at least 0.05 of the time duration of the slot, at least 0.1 of the time duration of the slot or 0.15 of the slot duration. Alternatively, although the described offset in time provides for the advantage that the transmitted part signal may uniquely associated with a slot, embodiments are not limited hereto such that an offset in time of less than -0.5 of the time duration and/or more than +0.5 of the time duration may be selected.

Alternatively or in addition, the set-individual offset may comprise a frequency offset. The frequency offset may be larger than -0.5 of a frequency bandwidth of a carrier or subcarrier used by the set and may be smaller than +0.5 of the frequency bandwidth. I.e., the set 22 being arranged within a carrier or subcarrier, the frequency offset may be smaller than half of the bandwidth in positive or in negative direction. Alternatively, although the described offset in frequency provides for the advantage that the transmitted part signal may uniquely associated, embodiments are not limited hereto such that an offset in frequency of less than -0.5 of the bandwidth and/or more than +0.5 of the bandwidth may be selected.

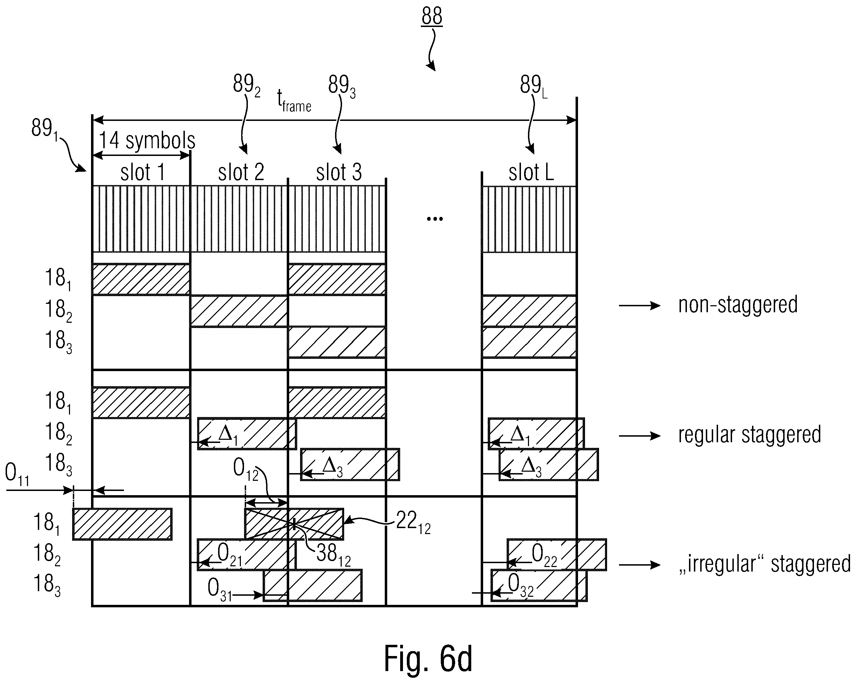

Fig. 6d shows a comparison between different offset schedules. Different layers 18ᵢ may access or use different slots of frame 88, e.g. according to a sparse allocation scheme such as non-orthogonal multiple access (NOMA). Alternatively, a different scheme may be implemented and/or all slots may be accessed or used by one or more layers.

By way of example, the different schemes to be compared in Fig. 6d are illustrated over a common time axis t of time duration t_{Frame} of frame 89, wherein the details explained may be transferred to any other resource being equipped with an offset such as frequency. The time axis may be valid for the base station, i.e., shows the arrival of signals at the base station.

The upper portion of Fig. 6d shows a synchronized or non-staggered or offset-free communication using the communication scheme or frame structure of Fig. 2b. Offset free refers, as the set-individual offset, to a synchronization at the base station, i.e., the signals of the transmitters arriving at the base station may be, for example, free of an offset, e.g., using a timing advance or the like.

The centered portion of Fig. 6d shows a known regular staggered communication in which each layer 18 has a constant, i.e., layer-specific offset such that a transmitter using layer 18₂ uses offset Δ₁ for all slots and a transmitter using layer 18₃ uses a different offset Δ₁ for all slots.

The lower portion of Fig. 6d shows a concept in accordance with embodiments. The concept may be referred to as irregular staggered which does not exclude that set-specific offsets for a regular or irregular pattern within a frame but refers to differing offset values within a layer 18. For example, in layer 18₁ a set-specific offset O₁₁, is implemented for the first set 22₁₁ of physical resources used in slot 89₁ and set-specific offset O₁₂ is implement for the second set 22₁₂ of physical resources used in slot 89₃. Offsets O₁₁ and O₁₂ may differ from each other. Similarly, in layer 18₂ a set-specific offset O₂₁, is implemented for the first used set 22₂₁ of physical resources used in slot 89₂ and set-specific offset O₂₂ is implement for the second used set 22₂₂ of physical resources used in slot 89_{L}. Similarly, in layer 18₃ a set-specific offset O₃₁, is implemented for the first used set 22₃₁ of physical resources used in slot 89₃ and set-specific offset O₃₂ is implement for the second used set 22₃₂ of physical resources used in slot 89_{L}.

The set-individual offset O₁₂ may be comparatively large but is selected such that a center of gravity 38₁₂ of the set 22₁₂ is still within the associated or dedicated slot 89₃. Accordingly, centers of gravity of the other sets may be inside the associated slots. The center of gravity of a slot such as center of gravity 38₁₂ may be determined by a center of time or half of the time duration and/or by a center of frequency or half of the used frequency bandwidth.

Whilst offset values of different layers may be same or equal, even for a same slot used in different layers, it is preferred that set-specific offset values within a same layer 18ᵢ differ from each other with regard to at least one resource or dimension of the grid. That is, by way of example, when implementing a set-specific offset in two dimensions such as time and frequency, differing in time, set-specific offsets may be same or equal in frequency and/or vice versa.

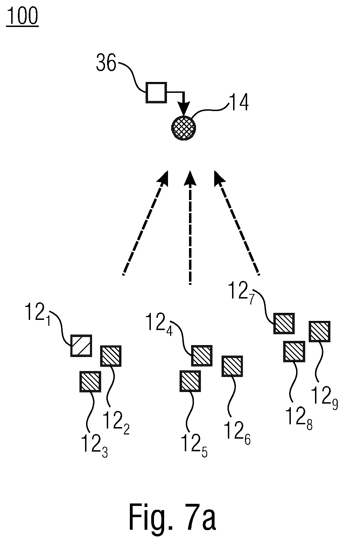

Fig. 7a shows a schematic block diagram of the wireless communications network cell 100 in a configuration having the base station 14 receiving signals from nine transmitting UEs 12₁ to 12₉.

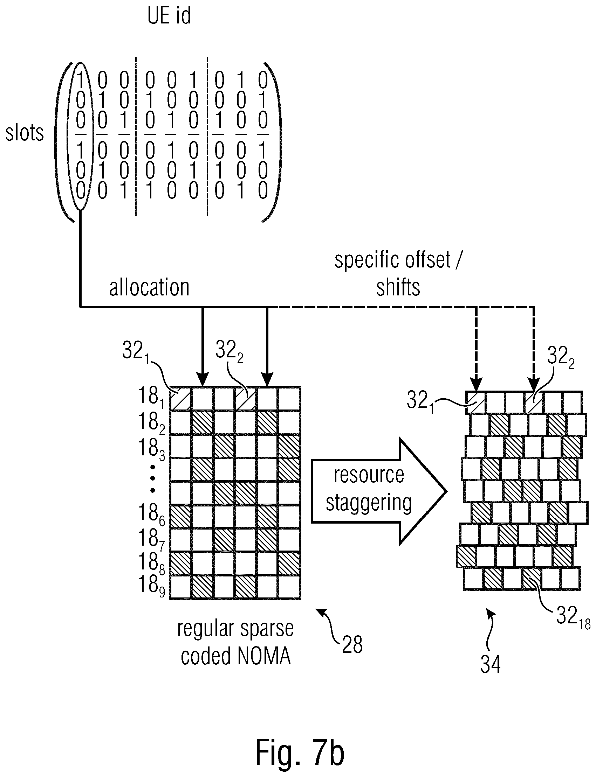

Fig. 7b shows a schematic diagram of an example scheme for scheduling the six OFDMA symbols to the nine UEs 12₁ to 12₉ of Fig. 7a so as to overload the wireless channel and to enable the nine transmitters to transmit simultaneously. Although this overload may lead to interference, based on a pattern according to which the different symbols are accessed, successful decoding may be possible. Alternatively or in addition to the number of symbols, the frame may be divided differently. An overloading allocation 28 this allocates only specific symbols or allocated sets 32 of resources to respective layers 18₁ to 18₉.

To each transmitter 12₁ to 12₉, a respective layer 18₁to 18₉ may be associated. As described, more than one layer may be associated to a transmitter. The layers 18 associated to a single transmitter may be cyclically shifted so as to allow a single transmitter using resources that are spaced within the respective resources so as to increase an overall communication quality. For example, if a specific time slot or frequency range is blocked, probability may be low or reduced for a spaced apart time or frequency.

An overloading allocation 34 with offsets allows to obtain an offset to each allocated set 32₁ to 32₁₈ over all layers 18₁ to 18₉. The offset may be different between sets 32 within a layer 18₁ to 18₉.

In other words, one aspect of the embodiments described herein is that each user/layer has a random or deterministic offset, i.e., time delay or frequency shift or space shift in the range of at most ± half the respective maximum values such as a slot-duration or frequency bandwidth for each transmission, in particular, sparse transmissions. Each user/layer may transmit on more than one slot within one frame, for example, in a regular sparse scheme. Each of these transmissions may have a certain time shift and/or frequency shift on top. If shifts/delays are selected in the range of ± half the slot duration, the system may be denoted as "frame asynchronous", i.e., parts of the message may exceed the frame-boundaries, e.g., when the first slot has a negative time-offset and/or the last slot has a positive time-offset. If shifts are selected such that all transmissions area allocated within the frame, the system may be denoted as frame-synchronous. This may be obtained, for example, when leaving the first and/or last slot unused, e.g., in a sparse transmission, when providing for a positive offset for the first slot and/or a negative offset for the last slot. Although this was described in connection with time, the slots can also be frequency bins or any other resource.

When referring again to Fig. 7a, the delay to be applied may be determined by a network controller being in communication with the base station. Such a network controller may be at least partially implemented at a distant entity in communication with the base station and/or may at least partially be implemented as part of the base station. The network controller may at least partially be implemented in one or more transmitters.

The network controller 36 may be configured for determining an upper bound and/or a lower bound of the set-individual offset. Such information may be broadcasted, for example, by the network controller 36 and/or the base station 14. The transmitters 12₁ and 12₉ may select their respective offset to be applied within the boundaries communicated by the network controller 36 and/or the base station 14. That is, according to an embodiment, the transmitter selects its offset within the boundaries. Alternatively or in addition, the network controller may be configured for determining the set-individual offset. The network controller may thus provide for a direct value, a range from which the set-specific offset is to be selected and/or a codebook containing a plurality of offset-values, e.g., to determine a sequence of offset-values for a plurality of slots or frames such that by using such a sequence additional information or redundancy may be transmitted. The sequence may be determined or selected, for example, so as to obtain any kind of pseudo-random sequence being influenced, for example by a user-ID, a type of the device, a type of application operated by the transmitter or the like. Such a sequence may be pre-configured by way of a codebook.

The offset may be determined for a single transmitter, for all transmitters and/or group-wise for a group of transmitters. For example, transmitters that are collocated with respect to each other, for example, transmitters 12₁ to 12₃, transmitters 12₄ to 12₆ and transmitters 12₇ to 12₉, may be controlled so as to implement a same or at least comparable set-individual offset.

Such a group-based selection of the set-specific offset or a sequence thereof may be done based, for example, on a device category such that devices of a same category may have same offset-values or same boundaries, wherein different boundaries of different types of devices may be connected/overlapping or disjoint. Example types of devices are Internet-of-Things (IoT), voice, URLLC, eMBB (enhanced Mobile Broadband), etc., wherein this does not exclude a finer granularity, e.g., within loT devices, for example, devices relating to water, gas, power etc. Alternatively or in addition, such a group based selection may also refer to an application being executed or implemented at the transmitter. This allows to facilitate autonomous networks excluding a centralized base station. Further, groups may also relate to types of services, e.g., voice services, loT services, gold services or the like. For some or each of such services a specific offset or range thereof may be defined.

The base station 14 may transmit a signal to the transmitters 12₁ to 12₉, for example, as a signal having a dedicated receiver and/or by use of a broadcast signal. The signal may indicate the determined set-individual offset. The transmitter 12₁ to 12₉ may apply the set-individual offset according to the received signal. That is, alternatively or in addition to setting only the boundaries of the specific set-individual offset, the set-individual offset may be determined completely by the network controller 36. Alternatively or in addition, the transmitter 12₁ to 12₉ may select the set-individual offset randomly.

According to an embodiment, the base station 14 may operate the wireless communications network cell 100 according to a specific communication mode or in one of a predefined communication mode. A first mode may be, for example, to allocate all slots to a transmitter. a second mode may be, for example, to have a first overload rate such as 3:2. A third mode may be implemented so as to implement a second overload rate such as 9:6 as indicated in Fig. 7b or a different rate. The base station 14 may implement only one of those modes or may be configured to switch between modes, for example, responsive to a number of transmitters requesting communication within the cell 100. In either way, the transmitters may have knowledge about a specific number of sets 22 that may be used for communication within a frame. The transmitters 12 may further have knowledge about predefined patters of set-individual offsets, for example, by receiving a respective signal from the network controller 36 over the base station 14. Alternatively, such information may be common for the whole network and thus known to the transmitter. The transmitter 12₁ to 12₉ may select one of the patterns set-individual offset and may implement the set-individual offset according to the selected pattern.

The network controller 36 is configured for determining a plurality of sets of offsets. Each set of offsets contains a plurality of offset-values associated to a plurality of sets 22 of physical resources. The transmitter is configured for selecting one of the plurality of sets of offsets and to apply the set-individual offset to a plurality of sets 22 of physical resources within a frame.

Each of the sets of offset-values comprises a comrpsies unique offset-pattern associated to the set of offset values. Such a uniqueness is also known to the base station 14 and thus enhances decoding or resolving interference as, for example, detected offsets for a subset of used sets 22 may lead to a pre-known or at least decodable set-individual offset for one or more remaining sets.

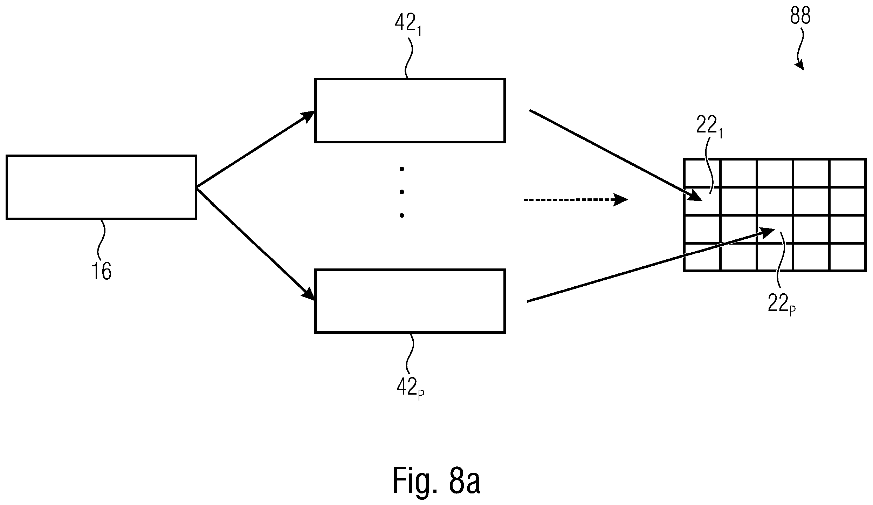

Fig. 8a shows a schematic block diagram illustrating the concept of mapping or dividing the signal 16 to be transmitted by a transmitter 12 into a number of part signals 42₁ to 42_{P}, wherein P may be any number larger than 1, for example, 2, 3, 4, 5, or even a larger number, e.g., 10, 15 or higher. The content of the signal 16 is split so as to be included into one or more part signals 42₁ to 42_{P}. For example, the content of the signal 16 is coded with a code rate such that information that needs to be transmitted is increased. When exceeding a number of OFDM symbols within a slot, a higher number of slots is used so as to commonly transmit the signal 16. One or more of the part signals 42₁ to 42_{P} may contain a retransmission of a different part signal. I.e., the content of any part signal 42₁ to 42_{P} may be same and/or different when compared to each of the remaining part signals. Each of the part signals 42₁ to 42_{P} may be mapped to a respective set 22₁ to 22_{P} of frame 88. That is, the transmitter is configured for dividing the signal 16 into a number of part signal and/or to retransmit at least a part of the signal as a part signal.

The number of part signals 42 may be known at the beginning of mapping the signal 16 into part signals, e.g., based on the number of fractions used or required. Alternatively, the number may dynamically be chosen, e.g., when awaiting a positive or negative acknowledgement (ACK/NACK) that may cause the transmitter to transmit a further retransmission as part of the signal, thereby spontaneous or dynamically increasing the number of part signals. That is, the number of re-transmissions can be fixed or adaptive, e.g. each UE re-transmits until an ACK is received of a maximum number of re-transmissions is performed. Embodiments relate to the set-individual offset being implemented as a pattern. For example, each part of the message (part signal) is derived from the number of repetitions may indicate its number of retransmissions by the offset chosen. (e.g. the first transmission has 0 offset, the second has 1, the third has 2 ... etc.). This has the advantage that a receiver can estimate the number of re-transmissions required for successful decoding.

I.e., a part signal may be at least a first re-transmission of another part signal, wherein the set-individual offset is selected such that the set-individual offset applied to the retransmitting part-signal is associated with a number of prior transmissions.

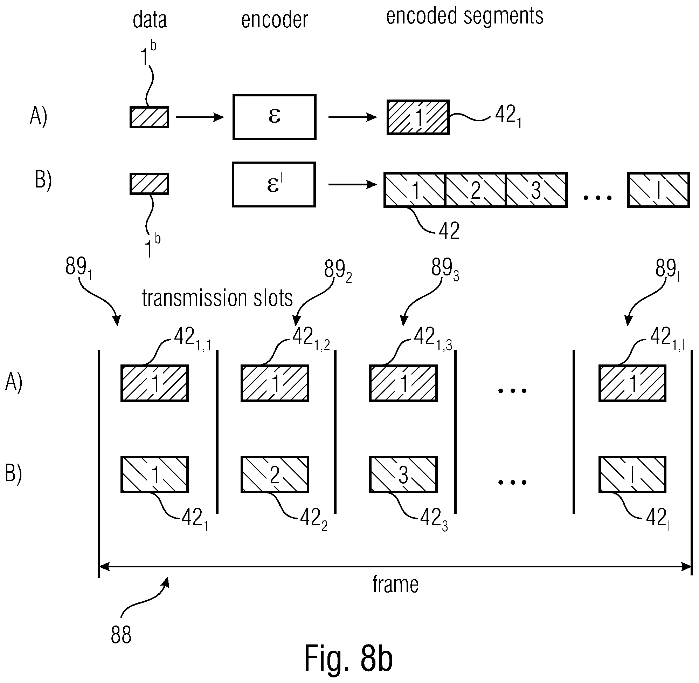

Fig. 8b shows a further schematic block diagram illustrating the concept of mapping the signal 16 to be transmitted by a transmitter 12 into a number of part signals 42. According to an option A) the signal 16 may be transmitted in one single slot 89ᵢ of frame 88, i.e., the signal 16 may be incorporated into a single part signal 42₁. This part signal 42₁ may be repeatedly transmitted in the associated slots which are, for example, all slots 89 of frame 88. That is, the part signal 42₁ is transmitted as part signal 42_{1,1} in the first allocated or selected slot 89₁, as part signal 42_{1,2} in the second slot 89₂, as part signal 42_{1,3} in the third slot 89₃ and so on. The part signals 42_{1,i} with i = 1,...,I may thus contain equal information or be equal.

According to an option B), the signal 16 is divided into a number of I part signals 42ᵢ with i = 1,...,I and be each a fraction of signal 16 and thus comprise different information. Each of the part signals 42ᵢ may be transmitted in a corresponding slot 89ᵢ.

Option A) and B) are extreme cases in either having no retransmission and only fractions in option B) or only retransmissions and no fractions in option A). Embodiments are not limited hereto but allow for mixing both options up, i.e., to have fractions as well as repetitions/retransmissions. Further embodiments are not limited to transmissions in which each slot is assigned to a user but can also be implemented in sparse allocation schemes.

Embodiments allow thus to an improved diversity that can be exploded at the receiver for decoding. Embodiments may be used for an extension to NOMA with sparse resource allocation in order to increase the time-diversity and to resolve collisions, but are not limited hereto and may also be implemented in connection with regular resource allocations. Embodiments may alternatively or in addition be used as an extension, i.e., on top, to time-hoping concepts. Such a design is proposed for ultra-reliable low latency communication (URLLC), see [2]. In connection with the embodiments described herein, a low latency may be obtained together with a high probability of decoding messages at the receiver such that both targets may be achieved, i.e., having a high throughput and having a high reliability. An example for a known URLLC given in [2], where K repetitions are scheduled persistently to the UE in order to increase the reliability states that: "even more than one UE is assigned the same periodicity, offset and symbol allocation with the slot, and if these UEs become active at the same time, then they will collide persistently. Frequency hopping can address this situation to some extent provided there are sufficiently many RBs available to hop across relative to the RB allocation needed for each UE. However, especially if reliability is an important consideration (such as for eURLLC), the number of RBs required for each transmission may itself be large. In such a scenario, an alternative option is to have hopping in the time domain. The same design is applicable to both PUSCH repetition with and without grant."

Embodiments are related to a sign and additional user dependent fractional offset to the repetitions (on resource element (RE)-level in time/frequency domain) in order to provide persistent collision.

A transmitter according to an embodiment, for example, the transmitter 12₁ and/or 12₂ of Fig. 4 and/or one or more of the transmitters 12₁ to 12₉ of Fig. 7a may comprise an interface configured for transmitting a signal in a wireless communications network cell of a wireless communications network. The transmitter may comprise a control unit configured for mapping the signal into a number of part signals, as described, for example, in connection with Fig. 8a. The control unit may be configured for transmitting the number of part signals with a corresponding number of associated slots or sets 22 of the wireless communications network cell using a corresponding number of sets of physical resources. Each set may contain at least a subset of the associated plurality of physical resources of the slot. The control unit may be configured for transmitting the number of part signals with a set-individual offset such that each set of physical resources is shifted with respect to a synchronized start of the slot in time and/or frequency. That is, the part signals may be transmitted in a set 22 each, wherein each set may have a subset or all of the available resources of a slot.

A base station according to an embodiment, for example, the base station 14, may be configured for operating a wireless communications network cell, e.g., cell 100, according to a wireless communications network scheme. The scheme may comprise a plurality of frames, each frame comprising a plurality of slots, each slot comprising a plurality of associated physical resources. The base station may comprise an interface configured for receiving a first number of part signals from a first transmitter. The interface may be configured for receiving a second number of part signals from a second transmitter. Each part signal is associated to a slot of a dedicated frame, i.e., the first number of part signals and the second number of part signals are received within the same frame and are scheduled, by the respective transmitter, to the same frame. Each part signal of the first number of part signals comprises a set-individual offset within the first number and with respect to a synchronized start of the slot. Each part signal of the second number of part signals comprises a set-individual offset within the second number and with respect to the synchronized start of the slot. According to embodiments, the set-individual offsets of the first number and of the second number may be same, for example, based on a group-wise definition of a network controller and/or by selecting the same values by the respective transmitter. Alternatively, the offsets may be different when compared to each other. In both cases, the set-individual offsets may comprise different offset values within the first number and within the second number of parked signals. the base station may comprise a decoding unit configured for decoding the received first part signals and the received second part signals and for correcting interference caused by an overlap of the first part signals with the second part signals.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### References

[1] 3GPP: R1-1810623, Transmitter side signal processing of ACMA, Hughes
[2] 3GPP: R1-1811274, "Enhanced SPS and grant-free transmissions"

## Claims

1. A transmitter (12) comprising:
an interface configured for transmitting a signal (16) in a wireless communications network cell (100) of a wireless communications network;
a control unit configured for mapping the signal (16) to a number of part signals (42) and for transmitting the number of part signals (42) with a corresponding number of associated slots (89) of the wireless communications network cell (100) using a corresponding number of sets (22) of physical resources, each set (22) containing at least a subset of the associated plurality of physical resources of a slot (89);
wherein the control unit is configured for transmitting the number of part signals (42) with a set-individual offset (O) being individual for the set of physical resources wherein each set (22) of physical resources is shifted with respect to a synchronized start of the slot; **characterized in that**:
the transmitter is adapted to obtain at least one of the part signals to comprise a retransmission of a different part signal; and/or
the transmitter (12) is configured for receiving a signal indicating a plurality of sets of offsets and for selecting one of the plurality of sets of offsets and to apply the set-individual offsets (O) to a plurality of sets (22) of physical resources within a frame (88) comprising a number of slots (89).

2. The transmitter according to claim 1, wherein the transmitter is configured for deriving a part signal from a number of repetitions of the transmission and to select the set-individual offset based on the number of retransmissions, wherein the set-individual offset indicates a number of retransmissions.

3. The transmitter according to claim 1 or 2 , wherein the transmitter is configured for dividing the signal (16) into a number of part signal and/or to retransmit at least a part of the signal as a part signal.

4. The transmitter of one of previous claims, wherein the transmitter is configured for dynamically mapping the signal into a dynamically changing number of part signals.

5. The transmitter according to one of previous claims,
wherein the transmitter (12) is configured for determining the set-individual offset (O) so as to be within a lower bound and an upper bound indicated by a network controller or a base station; and/or
wherein the transmitter (12) is configured for applying the set-individual offset according to a received signal indicating the set-individual offset (O),; and/or wherein the transmitter (12) is configured for selecting the set-individual offset (O) randomly.

6. The transmitter of one of previous claims; wherein when the transmitter (12) is configured
for receiving a signal indicating a plurality of sets of offsets and for selecting one of the plurality of sets of offsets and to apply the set-individual offsets (O) to a plurality of sets (22) of physical resources within a frame (88) comprising a number of slots (89), the each of the sets of offset-values comprises a unique offset-pattern associated to the set of offset-values.

7. The transmitter of one of previous claims, wherein the transmitter (12) is configured for using the slots (89) according to a sparse allocation scheme.

8. The transmitter of one of previous claims, wherein the transmitter (12) is configured for using the slots according a non-orthogonal multiple access scheme.

9. A base station (14) configured for operating a wireless communications network cell (100) of the wireless communications network so as to provide communication in a plurality of slots (89), each slot (89) comprising a plurality of associated physical resources;
wherein the base station (14) is configured for receiving, from a plurality of transmitters a corresponding plurality of signals (16), each signal (16) being mapped to a number of part signals (42) and transmitted with the number of part signals (42) with a corresponding number of associated slots (89) using a corresponding number of sets (22) of physical resources, each set (22) containing at least a subset of the associated plurality of physical resources of a slot (89); shifted with a set-individual offset, O, being individual for the set of physical resources with respect to a synchronized start (24, 26) of the slot (89); and **characterized in that**:
at least one of the part signals (42) comprises a retransmission of a different part signal (42); and/or the set-individual offset is selected by a transmitter and from a plurality of sets of offsets and applied to a plurality of sets (22) of physical resources within a frame (88) comprising a number of slots (89); and the base station (14) is configured for processing the received signals.

10. The base station of claim 9,
wherein a network controller (36) being in communication with the base station (14) is configured for determining an upper bound and a lower bound of the set-individual offset, O;
wherein the base station (14) is configured for transmitting a signal to the transmitter (12), indicating the determined set-individual offset, O.

11. A network controller for operating in a wireless communications network,
wherein the network controller (36) is configured for determining an upper bound and a lower bound of a set-individual offset, O, being individual for a set of physical resources with respect to a synchronized start (24, 26) of a slot (89) of the wireless communications network; wherein the set-individual offset, O, relates to a mapping of a signal to be transmitted by a transmitter into a number of part signals (42) the number of part signals (42) to be transmitted with a corresponding number of associated slots (89) of a wireless communications network cell (100) of the wireless communication network using a corresponding number of sets (22) of physical resources, each set (22) containing at least a subset of the associated plurality of physical resources of the slot (89); and for providing the upper bound and the lower bound to a base station and/or a transmitter; **characterized in that**:
at least one of the part signals (42) comprises a retransmission of a different part signal (42) and/or the set-individual offset is selected by a transmitter and from a plurality of sets of offsets and applied to a plurality of sets (22) of physical resources within a frame (88) comprising a number of slots (89).

12. The network controller of claim 11, wherein the network controller (36) is adapted for a communication with a base station (14) of the wireless communication network and is configured for determining a plurality of sets of offsets, each set of offsets containing a plurality of offset-values associated to a plurality of sets (22) of physical resources, wherein the network controller is configured for providing the plurality of sets of offsets to the base station or to the transmitter.

## Patentansprüche

1. Sender (12), der folgende Merkmale aufweist:
eine Schnittstelle, die zum Senden eines Signals (16) in einer Drahtloskommunikationsnetz-Zelle (100) eines Drahtloskommunikationsnetzes konfiguriert ist;
eine Steuereinheit, die zum Abbilden des Signals (16) auf eine Anzahl von Teilsignalen (42) und zum Senden der Anzahl von Teilsignalen (42) mit einer entsprechenden Anzahl von zugeordneten Schlitzen (89) der Drahtloskommunikationsnetz-Zelle (100) unter Verwendung einer entsprechenden Anzahl von Mengen (22) von physischen Ressourcen konfiguriert ist, wobei jede Menge (22) zumindest eine Teilmenge der zugeordneten Mehrzahl von physischen Ressourcen eines Schlitzes (89) enthält;
wobei die Steuereinheit zum Senden der Anzahl von Teilsignalen (42) mit einem Mengen-individuellen Versatz (O) konfiguriert ist, der für die Menge von physischen Ressourcen individuell ist, wobei jede Menge (22) von physischen Ressourcen in Bezug auf einen synchronisierten Start des Schlitzes verschoben ist; **dadurch gekennzeichnet, dass**:
der Sender dazu angepasst ist, zumindest eines der Teilsignale zu erhalten, um eine erneute Sendung eines anderen Teilsignals aufzuweisen; und/oder
der Sender (12) zum Empfangen eines Signals, das eine Mehrzahl von Mengen von Versätzen angibt, und zum Auswählen eines der Mehrzahl von Mengen von Versätzen konfiguriert ist, und zum Anwenden der Mengen-individuellen Versätze (O) auf eine Mehrzahl von Mengen (22) von physischen Ressourcen innerhalb eines Rahmens (88), der eine Anzahl von Schlitzen (89) aufweist.

2. Sender gemäß Anspruch 1, wobei der Sender zum Herleiten eines Teilsignals aus einer Anzahl von Wiederholungen der Sendung konfiguriert ist, und zum Auswählen des Mengen-individuellen Versatzes basierend auf der Anzahl von erneuten Sendungen, wobei der Mengen-individuelle Versatz eine Anzahl von erneuten Sendungen angibt.

3. Sender gemäß Anspruch 1 oder 2, wobei der Sender zum Teilen des Signals (16) in eine Anzahl von Teilsignal konfiguriert ist, und/oder zum erneuten Senden zumindest eines Teils des Signals als ein Teilsignal.

4. Sender gemäß einem der vorhergehenden Ansprüche, wobei der Sender zum dynamischen Abbilden des Signals in eine sich dynamisch ändernde Anzahl von Teilsignalen konfiguriert ist.

5. Sender gemäß einem der vorhergehenden Ansprüche,
wobei der Sender (12) zum derartigen Bestimmen des Mengen-individuellen Versatzes (O), dass er innerhalb einer unteren Grenze und einer oberen Grenze liegt, die durch eine Netzsteuerung oder eine Basisstation angegeben werden, konfiguriert ist; und/oder
wobei der Sender (12) zum Anwenden des Mengen-individuellen Versatzes gemäß einem empfangenen Signal, das den Mengen-individuellen Versatz (O) angibt, konfiguriert ist; und/oder
wobei der Sender (12) zum zufälligen Auswählen des Mengen-individuellen Versatzes (O) konfiguriert ist.

6. Sender gemäß einem der vorhergehenden Ansprüche, wobei, wenn der Sender (12) zum Empfangen eines Signals, das eine Mehrzahl von Mengen von Versätzen angibt, und zum Auswählen eines der Mehrzahl von Mengen von Versätzen konfiguriert ist, und zum Anwenden der Mengen-individuellen Versätze (O) auf eine Mehrzahl von Mengen (22) von physischen Ressourcen innerhalb eines Rahmens (88), der eine Anzahl von Schlitzen (89) aufweist, jede der Mengen von Versatzwerten ein eindeutiges Versatzmuster aufweist, das der Menge von Versatzwerten zugeordnet ist.

7. Sender gemäß einem der vorhergehenden Ansprüche, wobei der Sender (12) zum Verwenden der Schlitze (89) gemäß einem spärlichen Zuteilungsschema konfiguriert ist.

8. Sender gemäß einem der vorhergehenden Ansprüche, wobei der Sender (12) zum Verwenden der Schlitze gemäß einem nicht-orthogonalen Mehrfachzugriffsschema konfiguriert ist.

9. Basisstation (14), die zum Betreiben einer Drahtloskommunikationsnetz-Zelle (100) des Drahtloskommunikationsnetzes konfiguriert ist, um eine Kommunikation in einer Mehrzahl von Schlitzen (89) bereitzustellen, wobei jeder Schlitz (89) eine Mehrzahl von zugeordneten physischen Ressourcen aufweist;
wobei die Basisstation (14) zum Empfangen, von einer Mehrzahl von Sendern, einer entsprechenden Mehrzahl von Signalen (16) konfiguriert ist, wobei jedes Signal (16) auf eine Anzahl von Teilsignalen (42) abgebildet und mit der Anzahl von Teilsignalen (42) mit einer entsprechenden Anzahl von zugeordneten Schlitzen (89) unter Verwendung einer entsprechenden Anzahl von Mengen (22) von physischen Ressourcen gesendet wird, wobei jede Menge (22) zumindest eine Teilmenge der zugeordneten Mehrzahl von physischen Ressourcen eines Schlitzes (89) enthält; verschoben mit einem Mengen-individuellen Versatz, O, der für die Menge von physischen Ressourcen individuell ist, in Bezug auf einen synchronisierten Start (24, 26) des Schlitzes (89); und **dadurch gekennzeichnet, dass**:
zumindest eines der Teilsignale (42) eine erneute Sendung eines anderen Teilsignals (42) aufweist; und/oder der Mengen-individuelle Versatz durch einen Sender und aus einer Mehrzahl von Mengen von Versätzen ausgewählt und auf eine Mehrzahl von Mengen (22) von physischen Ressourcen innerhalb eines Rahmens (88), der eine Anzahl von Schlitzen (89) aufweist, angewendet wird; und
die Basisstation (14) zum Verarbeiten der empfangenen Signale konfiguriert ist.

10. Basisstation gemäß Anspruch 9,
wobei eine Netzsteuerung (36), die in Kommunikation mit der Basisstation (14) steht, zum Bestimmen einer oberen Grenze und einer unteren Grenze des Mengen-individuellen Versatzes, O, konfiguriert ist;
wobei die Basisstation (14) zum Senden eines Signals an den Sender (12), das den bestimmten Mengen-individuellen Versatz, O, angibt, konfiguriert ist.

11. Netzsteuerung zum Betreiben in einem Drahtloskommunikationsnetz,
wobei die Netzsteuerung (36) zum Bestimmen einer oberen Grenze und einer unteren Grenze eines Mengen-individuellen Versatzes, O, der für eine Menge von physischen Ressourcen individuell ist, in Bezug auf einen synchronisierten Start (24, 26) eines Schlitzes (89) des Drahtloskommunikationsnetzes konfiguriert ist; wobei sich der Mengen-individuelle Versatz, O, auf eine Abbildung eines von einem Sender zu sendenden Signals in eine Anzahl von Teilsignalen (42) bezieht, wobei die Anzahl von Teilsignalen (42) mit einer entsprechenden Anzahl von zugeordneten Schlitzen (89) einer Drahtloskommunikationsnetz-Zelle (100) des Drahtloskommunikationsnetzes unter Verwendung einer entsprechenden Anzahl von Mengen (22) von physischen Ressourcen zu senden ist, wobei jede Menge (22) zumindest eine Teilmenge der zugeordneten Mehrzahl von physischen Ressourcen des Schlitzes (89) enthält; und zum Bereitstellen der oberen Grenze und der unteren Grenze an eine Basisstation und/oder einen Sender; **dadurch gekennzeichnet, dass**:
zumindest eines der Teilsignale (42) eine erneute Sendung eines anderen Teilsignals (42) aufweist und/oder der Mengen-individuelle Versatz durch einen Sender und aus einer Mehrzahl von Mengen von Versätzen ausgewählt und auf eine Mehrzahl von Mengen (22) von physischen Ressourcen innerhalb eines Rahmens (88), der eine Anzahl von Schlitzen (89) aufweist, angewendet wird.

12. Netzsteuerung gemäß Anspruch 11, wobei die Netzsteuerung (36) für eine Kommunikation mit einer Basisstation (14) des Drahtloskommunikationsnetzes angepasst ist und zum Bestimmen einer Mehrzahl von Mengen von Versätzen konfiguriert ist, wobei jede Menge von Versätzen eine Mehrzahl von Versatzwerten enthält, die einer Mehrzahl von Mengen (22) von physischen Ressourcen zugeordnet sind, wobei die Netzsteuerung zum Bereitstellen der Mehrzahl von Mengen von Versätzen an die Basisstation oder an den Sender konfiguriert ist.

## Revendications

1. Émetteur (12), comprenant :
une interface configurée pour transmettre un signal (16) dans une cellule de réseau de communications sans fil (100) d'un réseau de communications sans fil ;
une unité de commande configurée pour mapper le signal (16) en un nombre de signaux partiels (42) et pour transmettre le nombre de signaux partiels (42) avec un nombre correspondant de d'intervalles associés (89) de la cellule de réseau de communications sans fil (100), en utilisant un nombre correspondant d'ensembles (22) de ressources physiques, chaque ensemble (22) contenant au moins un sous-ensemble de la pluralité associée de ressources physiques d'un intervalle (89) ;
dans lequel l'unité de commande est configurée pour transmettre le nombre de signaux partiels (42) avec un décalage individuel de l'ensemble (O) étant individuel pour l'ensemble de ressources physiques, dans lequel chaque ensemble (22) de ressources physiques est décalé par rapport à un début synchronisé de l'intervalle ; **caractérisé en ce que** :
l'émetteur est adapté pour obtenir au moins un des signaux partiels pour comprendre une retransmission d'un signal partiel différent ; et/ou
l'émetteur (12) est configuré pour recevoir un signal indiquant une pluralité d'ensembles de décalages, et pour sélectionner l'un de la pluralité des ensembles de décalages et pour appliquer les décalages individuel de l'ensemble (O) à une pluralité d'ensembles (22) de ressources physiques dans une trame (88) comprenant un nombre de d'intervalles (89).

2. Émetteur selon la revendication 1, dans lequel l'émetteur est configuré pour dériver un signal partiel à partir d'un nombre de répétitions de la transmission et pour sélectionner le décalage individuel de l'ensemble sur la base du nombre de retransmissions, dans lequel le décalage individuel de l'ensemble indique un nombre de retransmissions.

3. Émetteur selon la revendication 1 ou 2, dans lequel l'émetteur est configuré pour diviser le signal (16) en un nombre de signal partiel et/ou pour retransmettre au moins une partie du signal sous la forme d'un signal partiel.

4. Émetteur selon l'une des revendications précédentes, dans lequel l'émetteur est configuré pour mapper dynamiquement le signal en un nombre de signaux partiels variant dynamiquement.

5. Émetteur selon l'une des revendications précédentes,
dans lequel l'émetteur (12) est configuré pour déterminer le décalage individuel de l'ensemble (O) de sorte à être dans une limite inférieure et une limite supérieure indiquées par un contrôleur de réseau ou une station de base ; et/ou
dans lequel l'émetteur (12) est configuré pour appliquer le décalage individuel de l'ensemble selon un signal reçu indiquant le décalage individuel de l'ensemble (O) ; et/ou
dans lequel l'émetteur (12) est configuré pour sélectionner le décalage individuel de l'ensemble (O) de manière aléatoire.

6. Émetteur selon l'une des revendications précédentes ; dans lequel, lorsque l'émetteur (12) est configuré pour recevoir un signal indiquant une pluralité d'ensembles de décalages et pour sélectionner un de la pluralité d'ensembles de décalages et pour appliquer les décalages individuel de l'ensemble (O) à une pluralité d'ensembles (22) de ressources physiques dans une trame (88) comprenant un nombre d'intervalles (89), chacun des ensembles de valeurs de décalage comprend un motif de décalage unique associé à l'ensemble de valeurs de décalage.

7. Émetteur selon l'une des revendications précédentes, dans lequel l'émetteur (12) est configuré pour utiliser les intervalles (89) selon un schéma d'allocation clairsemée.

8. Émetteur selon l'une des revendications précédentes, dans lequel l'émetteur (12) est configuré pour utiliser les intervalles selon un schéma d'accès multiple non orthogonal.

9. Station de base (14) configurée pour exploiter une cellule de réseau de communications sans fil (100) du réseau de communications sans fil, de sorte à fournir une communication dans une pluralité d'intervalles (89), chaque intervalle (89) comprenant une pluralité de ressources physiques associées ;
dans lequel la station de base (14) est configurée pour recevoir, à partir d'une pluralité d'émetteurs, une pluralité correspondante de signaux (16), chaque signal (16) étant mappé en un nombre de signaux partiels (42) et transmis avec le nombre de signaux partiels (42) avec un nombre correspondant d'intervalles associés (89) en utilisant un nombre correspondant d'ensembles (22) de ressources physiques, chaque ensemble (22) contenant au moins un sous-ensemble de la pluralité associée de ressources physiques d'un intervalle (89) ; décalé avec un décalage individuel de l'ensemble, O, étant individuel pour l'ensemble de ressources physiques par rapport à un début synchronisé (24, 26) de l'intervalle (89) ; et **caractérisé en ce que** :
au moins un des signaux partiels (42) comprend une retransmission d'un signal partiel différent (42) ; et/ou le décalage individuel de l'ensemble est sélectionné par un émetteur et à partir d'une pluralité d'ensembles de décalages et appliqué à une pluralité d'ensembles (22) de ressources physiques dans une trame (88) comprenant un nombre d'intervalles (89) ; et
la station de base (14) est configurée pour traiter les signaux reçus.

10. Station de base selon la revendication 9,
dans lequel un contrôleur de réseau (36), étant en communication avec la station de base (14), est configuré pour déterminer une limite supérieure et une limite inférieure du décalage individuel de l'ensemble, O ;
dans lequel la station de base (14) est configurée pour transmettre un signal à l'émetteur (12) indiquant le décalage individuel de l'ensemble, O, déterminé.

11. Contrôleur de réseau destiné à fonctionner dans un réseau de communication sans fil,
dans lequel le contrôleur de réseau (36) est configuré pour déterminer une limite supérieure et
une limite inférieure d'un décalage individuel de l'ensemble, O, étant individuel pour un ensemble de ressources physiques par rapport à un début synchronisé (24, 26) d'un intervalle (89) du réseau de communications sans fil ; dans lequel le décalage individuel de l'ensemble, O, se rapporte à un mappage d'un signal devant être transmis par un émetteur en un nombre de signaux partiels (42) le nombre de signaux partiels (42) devant être transmis avec un nombre correspondant d'intervalles associés (89) d'une cellule de réseau de communications sans fil (100), en utilisant un nombre correspondant d'ensembles (22) de ressources physiques, chaque ensemble (22) contenant au moins un sous-ensemble de la pluralité associée de ressources physiques de l'intervalle (89) ; et pour fournir la limite supérieure et la limite inférieure à une station de base et/ou à un émetteur ; **caractérisé en ce que** :
au moins un des signaux partiels (42) comprend une retransmission d'un signal partiel (42) différent et/ou le décalage individuel de l'ensemble est sélectionné par un émetteur et à partir d'une pluralité d'ensembles de décalages, et appliqué à une pluralité d'ensembles (22) de ressources physiques dans une trame (88) comprenant un nombre d'intervalles (89).

12. Contrôleur de réseau selon la revendication 11, dans lequel le contrôleur de réseau (36) est adapté pour une communication avec une station de base (14) du réseau de communication sans fil et est configuré pour déterminer une pluralité d'ensembles de décalages, chaque ensemble de décalages contenant une pluralité de valeurs de décalage associées à une pluralité d'ensembles (22) de ressources physiques, dans lequel le contrôleur de réseau est configuré pour fournir la pluralité d'ensembles de décalages à la station de base ou à l'émetteur.
